# DEMANDE DE BREVET EUROPEEN

(11) **EP 4 701 138 A1**
(43) Date de publication de la demande: **25.02.2026**
(21) Numéro de dépôt: 25177031.9
(22) Date de dépôt: 16.05.2025
(51) Int. Cl.: H04L 12/40

(54) **ARCHITECTURE DE TRANSMISSION DE DONNÉES ET VÉHICULE EQUIPE D'UNE TELLE ARCHITECTURE**

(30) Priorité: 22.08.2024 FR 2409057
(71) Demandeur: Airbus Helicopters, 13725 Marignane Cedex (FR)
(72) Inventeur: LETONNELIER, Clément, 13580 LA FARE LES OLIVIERS (FR); IZZO, Pascal, 13130 BERRE L'ETANG (FR)
(74) Mandataire: GPI Brevets

(57) **Abrégé**

La présente invention concerne une architecture (100) de transmission de données au sein d'un système avionique (101) équipant un véhicule (102), l'architecture (100) comportant un premier bus de terrain (A) et un premier bus avionique (AVX A).

Selon l'invention, l'architecture (100) comporte au moins deux voies primaires (A1, A2, A3, A4) comportant chacune :
∘ une interface de terrain primaire (IA1, IA2, IA3, IA4) permettant une communication entre chaque voie primaire (A1, A2, A3, A4) via le premier bus de terrain (A), les interfaces de terrain (IA1, IA2, IA3, IA4) étant interconnectées au premier bus de terrain (A), et
∘ une première interface avionique (IAVX1, IAVX2, IAVX3, IAVX4) compatible avec le premier bus avionique (AVX A).

L'architecture (100) comporte au moins un calculateur primaire (5) muni d'une deuxième interface avionique (IAVX5) en communication via le premier bus avionique (AVX A) avec uniquement une première interface avionique (IAVX1) parmi les premières interfaces avioniques (IAVX1, IAVX2, IAVX3, IAVX4).

## Description

La présente invention concerne une architecture de transmission de données et un véhicule, tel un aéronef, muni de cette architecture permettant une transmission de données au sein d'un système avionique du véhicule.

Plus particulièrement, l'invention se rapporte au domaine des architectures des systèmes permettant une transmission de données critiques entre des équipements avioniques et un calculateur montés sur des véhicules.

De manière générale, de telles architectures comportent un ou plusieurs bus présentant au moins une liaison pour transmettre ces données entre chaque équipement avionique et un calculateur configuré pour exécuter au moins une fonction critique du système avionique.

Le document EP4236268 divulgue ainsi un procédé et un système de transfert de données sur un bus avionique. Un tel bus avionique comporte notamment un nombre important de connexions entre chaque équipement avionique et un calculateur.

Le document US2007127521 décrit une interface de bus avionique notamment adaptée pour communiquer selon un protocole de communication via un bus Ethernet ou encore un bus avionique tel que désigné par l'expression en langue anglaise « Avionics Full Duplex » ou son acronyme « AFDX ».

Cependant, un tel protocole de communication est cher et lourd à mettre en œuvre pour l'ensemble des équipements électroniques d'un aéronef, mais également cher et lourd à mettre en œuvre pour un nombre restreint d'équipements critiques d'un aéronef.

Le document WO0237791A1 décrit un système de bus de terrain sécurisé comportant comme support de transmission un canal de communication ouvert, qui est également accessible aux équipements avioniques à l'aide d'autres connexions de communication. Il peut notamment s'agir d'une connexion en ligne standardisée existante, telle qu'une connexion Ethernet d'un réseau informatique existant, ou d'une connexion radio.

Enfin, le document US6003146A divulgue un procédé de détection d'erreurs dans des données d'aéronef transmises périodiquement au travers d'un bus avionique de données depuis une unité émettrice jusqu'à une unité réceptrice.

Le document US20100075614 D1 concerne une unité de communication avionique qui comprend au moins un port selon un premier type, au moins un port selon un second type et une fonction de communication. Les ports de premier type sont configurés pour permettre une liaison de communication utilisant un premier format de communication avec l'unité de communication. Les ports de second type sont configurés pour permettre une liaison de communication utilisant un second format de communication avec l'unité de communication.

Une telle unité de communication permet de fournir des communications vers et depuis un aéronef. En particulier, l'unité de communication comporte une unité de liaison entre un bus de terrain (ethernet) et un bus avionique (arinc 429).

Le document EP2309682 divulgue un dispositif de commutation de trames qui est quant à lui éloigné de l'invention.

La présente invention a alors pour objet de proposer une architecture alternative et innovante permettant de s'affranchir des limitations mentionnées ci-dessus. En outre, avec une architecture conventionnelle, chaque équipement est relié au calculateur. Le système peut alors présenter une masse non négligeable. L'invention vise à obtenir un système sûr et peu couteux qui remédie à cet inconvénient.

Ainsi, l'invention se rapporte à une architecture de transmission de données au sein d'un système avionique équipant un véhicule, tel un aéronef, l'architecture comportant un premier bus de terrain et un premier bus avionique, le premier bus avionique étant distinct du premier bus de terrain.

Cette architecture est remarquable en ce qu'elle comporte :
- au moins deux voies primaires comportant chacune :
   ∘ une interface de terrain primaire, les interfaces de terrain étant interconnectées au premier bus de terrain ; et
   ∘ une première interface avionique compatible avec le premier bus avionique ;
   ∘ une unité de traitement primaire générant des trames primaires montantes de données avioniques ;
   ∘ au moins une unité de conversion primaire convertissant chaque trame primaire montante de données avioniques générée par l'unité de traitement primaire en au moins une trame primaire montante de données de terrain destinée à être transmise via le premier bus de terrain à chacune des autres voies primaires et, inversement, convertissant chaque trame primaire montante de données de terrain reçue via le premier bus de terrain en une trame primaire montante de données avioniques ; et
   ∘ une mémoire primaire stockant un ensemble des trames primaires montantes de données avioniques comportant les trames primaires montantes de données avioniques générées par chacune des unités de traitement primaires des au moins deux voies primaires.

De plus, l'architecture comporte au moins un calculateur primaire muni d'une deuxième interface avionique en communication via le premier bus avionique avec uniquement une première interface avionique parmi les premières interfaces avioniques desdites au moins deux voies primaires, les autres premières interfaces avioniques étant laissées libres et disjointes de tout bus avionique, ledit au moins un calculateur primaire recevant l'ensemble des trames primaires montantes de données avioniques via le premier bus avionique et étant configuré pour, à partir d'au moins une des trames primaires montantes de données avioniques de l'ensemble des trames primaires montantes de données avioniques, exécuter au moins une fonction critique du système avionique.

En outre, l'expression « unité de traitement primaire » peut comprendre par exemple au moins un processeur, au moins un circuit intégré, au moins un système programmable, au moins un circuit logique, ces exemples ne limitant pas la portée donnée à l'expression « unité de traitement primaire ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Chaque voie primaire désigne alors une entité indépendante d'un calculateur ou d'un équipement. En plus d'une unité de traitement primaire et d'une mémoire primaire, chaque voie primaire peut comporter une interface d'acquisition et de contrôle et une alimentation en énergie électrique.

En outre, les voies primaires peuvent être synchronisées ou non entre elles pour effectuer la transmission des trames primaires montantes de données de terrain au travers du premier bus de terrain.

Par ailleurs, l'expression « trame primaire montante de données de terrain » désigne une structure de base d'un ensemble de données échangées via le premier bus de terrain. Cette structure est encadrée par des bits de début et de fin. Elle est donc généralement composée d'un entête, des données que l'on veut transmettre dans le premier bus de terrain et d'un postambule. Elle est dite « montante » car elle se rapporte aux données échangées entre les au moins deux voies primaires et remontant ensuite vers le calculateur avionique par opposition à des données descendantes émises par le calculateur avionique vers les au moins deux voies primaires.

De même, l'expression « trame primaire montante de données avioniques » désigne une autre structure de base d'un ensemble de données échangées via le premier bus avionique. Cette autre structure est encadrée par des bits de début et de fin. Elle est donc généralement composée d'un entête, des données que l'on veut transmettre dans le premier bus avionique et d'un postambule.

Cycliquement, l'unité de conversion primaire de chaque voie primaire peut préparer les trames primaires montantes de données avionique, puis les stocker dans la mémoire primaire au niveau d'une file d'émission des trames primaires montantes de données avioniques.

L'unité de conversion primaire peut alors encapsuler chaque trame primaire montante de données avioniques dans une ou plusieurs trames primaires montantes de données de terrain et les transmettre au moyen d'une interface de terrain primaire sur le premier bus de terrain.

Dès réception d'une trame primaire montante de données de terrain par les autres voies primaires, leur unité de conversion primaire désencapsule les trames primaires montantes de données avioniques qu'elle contient et les stocke dans leur mémoire primaire respective au niveau de leur file d'émission des trames primaires montantes de données avioniques.

Par suite, le premier bus de terrain permet la transmission entre chaque voie primaire des trames primaires montantes de données avioniques issues de toutes les voies primaires.

Le premier bus de terrain permet ainsi de mémoriser toutes les trames primaires montantes de données avioniques dans chaque mémoire primaire, une seule première interface avionique étant connectée au premier bus avionique pour transmettre toutes les trames primaires montantes de données avioniques au calculateur primaire.

Une telle architecture comporte alors un seul premier bus avionique pour l'ensemble des voies primaires. L'architecture présente donc un nombre minimal de liaisons ou de connexions. L'architecture comporte en effet une seule liaison sur le premier bus avionique liant une première interface avionique et la deuxième interface avionique du calculateur primaire recevant l'ensemble des trames primaires montantes de données avioniques. De même, le calculateur primaire comporte une seule deuxième interface avionique pour recevoir toutes les trames primaires montantes de données avioniques.

En outre, une telle unique liaison sur le premier bus avionique peut être réalisée entre n'importe laquelle des premières interfaces avioniques desdites au moins deux voies primaires et la deuxième interface avionique du calculateur primaire.

Le nombre de trames primaires montantes de données de terrain nécessaires pour émettre les trames primaires montantes de données avioniques sur le bus de terrain peut dépendre du type de bus de terrain utilisé.

De plus, le nombre de trames primaires montantes de données avioniques stockées dans chaque mémoire primaire peut dépendre de l'implémentation et du bilan d'occupation du premier bus avionique et du premier bus de terrain.

Une seule voie primaire parmi plusieurs peut transmettre les trames primaires montantes de données avionique au moyen de sa première interface avionique dès lors que des trames primaires montantes de données avioniques sont disponibles dans la file d'émission et tant que celle-ci n'est pas vide.

En outre, et selon un premier mode de réalisation de l'invention, l'architecture peut être de type simplex et comporter uniquement des voies primaires. Dans ce cas, l'architecture comporte un unique bus de terrain formé par ledit premier bus de terrain et un unique bus avionique formé par ledit premier bus avionique.

Selon un premier exemple d'architecture simplex, l'architecture peut comporter au moins un équipement comportant au moins deux voies primaires parmi lesdites au moins deux voies primaires.

Selon une première variante, l'architecture peut comporter un unique équipement comportant plusieurs interfaces de terrain reliées entre elles via le premier bus de terrain et par exemple une seule première interface avionique compatible avec le premier bus avionique.

Le premier bus de terrain peut dans ce cas faire totalement partie de l'unique équipement de l'architecture.

Selon une seconde variante, l'architecture peut comporter plusieurs équipements, chacun des équipements comporte alors plusieurs interfaces de terrain primaires reliées entre elles via le premier bus de terrain. Un seul des équipements peut en revanche être relié au premier bus avionique au moyen d'une première interface avionique.

Selon un second exemple d'architecture simplex, l'architecture peut comporter au moins deux équipements, chaque équipement comportant une seule desdites au moins deux voies primaires.

Par suite, lorsque lesdites au moins deux voies primaires comportent une première voie primaire et une seconde voie primaire, l'architecture peut comporter un premier équipement comportant exclusivement la première voie primaire et un second équipement comportant exclusivement la seconde voie primaire.

Autrement dit, le premier équipement peut comporter une première interface de terrain primaire et le second équipement peut comporter une seconde interface de terrain primaire. Ces première et seconde interfaces de terrain sont alors reliées entre elles via le premier bus de terrain.

Seul le premier équipement peut alors être relié au premier bus avionique au moyen d'une première interface avionique. L'interface avionique correspondant à la seconde voie primaire du second équipement est alors laissée libre.

Le premier bus de terrain peut dans ce cas être à la fois interne et externe aux équipements de l'architecture.

Avantageusement, ladite au moins une trame primaire montante de données de terrain reçue via le premier bus de terrain et/ou l'ensemble des trames primaires montantes de données avioniques peut/peuvent être transmis au moyen de signaux électriques ou optiques.

Autrement dit, le premier bus de terrain et/ou le premier bus avionique peut/peuvent comporter au moins un élément conducteur de l'électricité, tel un fil de cuivre, ou au moins une fibre optique pour transmettre ladite au moins une trame primaire montante de données de terrain et/ou l'ensemble des trames primaires montantes de données avioniques.

En pratique, le premier bus de terrain peut être choisi parmi le groupe comportant un bus CAN, un bus CAN-FD, un bus LIN, un bus selon la norme EIA-485, un bus selon la norme EIA-422, un bus FlexRay, un bus Ethernet, un bus EtherCAT, un bus DeviceNet, un bus CANOpen, un bus CANOpen FD, un bus MODBUS, un bus PROFIBUS et un bus PROFINET.

Par ailleurs, ladite au moins une trame primaire montante de données de terrain et/ou l'ensemble des trames primaires montantes de données avioniques reçu via le premier bus avionique peut/peuvent être transmis au moyen de signaux électriques ou optiques.

Autrement dit, le premier bus de terrain et/ou le premier bus avionique peut/peuvent comporter au moins un élément conducteur de l'électricité, tel un fil de cuivre, ou au moins une fibre optique permettant la transmission de ladite au moins une trame primaire montante de données de terrain et/ou de l'ensemble des trames primaires montantes de données avioniques entre la première interface avionique et la deuxième interface avionique.

Avantageusement, le premier bus avionique peut être choisi parmi le groupe comportant un bus selon la norme STANAG 3910, un bus selon la norme ARINC 429, un bus selon la norme MIL-STD-1553B, un bus selon la norme ARINC 629, un bus selon la norme EIA-485, un bus selon la norme EIA-422, un bus Ethernet et un bus selon la norme ARINC-664.

Selon un second mode de réalisation de l'invention, l'architecture peut être de type duplex et peut comporter, en plus du premier bus de terrain, du premier bus avionique et des voies primaires :
- un second bus de terrain, le second bus de terrain étant distinct du premier bus de terrain et du premier bus avionique ;
- un second bus avionique, le second bus avionique étant distinct du premier bus de terrain, du premier bus avionique et du second bus de terrain ;
- au moins deux voies secondaires distinctes desdites au moins deux voies primaires, lesdites au moins deux voies secondaires comportant chacune :
   ∘ une interface de terrain secondaire, les interfaces de terrain secondaires étant interconnectées au second bus de terrain ;
   ∘ une troisième interface avionique compatible avec le second bus avionique ;
   ∘ une unité de traitement secondaire générant des trames secondaires montantes de données avioniques ;
   ∘ au moins une unité de conversion secondaire convertissant chaque trame secondaire montante de données avioniques générée par l'unité de traitement secondaire en au moins une trame secondaire montante de données de terrain destinée à être transmise via le second bus de terrain à chacune des autres voies secondaires et, inversement, convertissant chaque trame secondaire montante de données de terrain reçue via le second bus de terrain en une trame secondaire montante de données avioniques ; et
   ∘ une mémoire secondaire stockant un ensemble des trames secondaires montantes de données avioniques comportant les trames secondaires montantes de données avioniques générées par chacune des unités de traitement secondaires desdites au moins deux voies secondaires.

Par ailleurs, l'architecture peut comporter au moins un calculateur secondaire muni d'une quatrième interface avionique en communication via le second bus avionique avec uniquement une troisième interface avionique parmi les troisièmes interfaces avioniques desdites au moins deux voies secondaires, les autres troisièmes interfaces avioniques étant laissées libres et disjointes de tout bus avionique, ledit au moins un calculateur secondaire recevant l'ensemble des trames secondaires montantes de données avioniques via le second bus avionique et étant configuré pour, à partir d'au moins une des trames secondaires montantes de données avioniques de l'ensemble des trames secondaires montantes de données avioniques, exécuter au moins une fonction critique du système avionique.

En outre, l'expression « unité de traitement secondaire » peut comprendre par exemple au moins un processeur, au moins un circuit intégré, au moins un système programmable, au moins un circuit logique, ces exemples ne limitant pas la portée donnée à l'expression « unité de traitement secondaire ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Par ailleurs, chaque voie secondaire désigne une entité indépendante d'un calculateur ou d'un équipement. En plus d'une unité de traitement secondaire et d'une mémoire secondaire, chaque voie secondaire peut comporter une interface d'acquisition et de contrôle et une alimentation en énergie électrique.

En outre, les voies secondaires peuvent être synchronisées ou non entre elles pour effectuer la transmission des trames secondaires montantes de données de terrain au travers du second bus de terrain.

Par ailleurs, l'expression « trame secondaire montante de données de terrain » désigne une structure de base d'un ensemble de données échangées via le second bus de terrain. Cette structure est encadrée par des bits de début et de fin. Elle est donc généralement composée d'un entête, des données que l'on veut transmettre dans le second bus de terrain et d'un postambule.

De même, l'expression « trame secondaire montante de données avioniques » désigne une autre structure de base d'un ensemble de données échangées via le second bus avionique. Cette autre structure est encadrée par des bits de début et de fin. Elle est donc généralement composée d'un entête, des données que l'on veut transmettre dans le second bus avionique et d'un postambule.

Cycliquement, l'unité de conversion secondaire de chaque voie secondaire peut préparer les trames de données avionique, puis les stocker dans la mémoire secondaire au niveau d'une file d'émission des trames secondaires montantes de données avioniques.

L'unité de conversion secondaire peut alors encapsuler chaque trame secondaire montante de données avioniques dans une ou plusieurs trames secondaires montantes de données de terrain et les transmettre au moyen d'une interface de terrain secondaire sur le second bus de terrain.

Dès réception d'une trame secondaire montante de données de terrain par les autres voies secondaires, leur unité de conversion secondaire désencapsule les trames secondaires montantes de données avioniques qu'elle contient et les stocke dans leur mémoire secondaire respective au niveau de leur file d'émission des trames secondaires montantes de données avioniques.

Par suite, le second bus de terrain permet la transmission entre chaque voie secondaire des trames secondaires montantes de données avioniques issues de toutes les voies secondaires.

Le second bus de terrain permet ainsi de mémoriser toutes les trames secondaires montantes de données avioniques dans chaque mémoire secondaire, une seule troisième interface avionique étant connectée au second bus avionique pour transmettre toutes les trames secondaires montantes de données avioniques au calculateur secondaire.

En outre, le calculateur secondaire peut être distinct ou confondu avec le calculateur primaire. De même, la au moins une fonction critique du système avionique mise en œuvre par le calculateur secondaire peut être distincte ou identique à la au moins une fonction critique du système avionique mise en œuvre par le calculateur primaire.

Par suite, une telle architecture comporte un seul second bus avionique pour l'ensemble des voies secondaires. L'architecture présente donc un nombre minimal de liaisons ou de connexions. L'architecture comporte ainsi une seule connexion sur le second bus avionique liant une troisième interface avionique et la quatrième interface avionique du calculateur secondaire recevant l'ensemble des trames secondaires montantes de données avioniques. De même, le calculateur secondaire comporte une seule quatrième interface avionique pour recevoir toutes les trames secondaires montantes de données avioniques.

En outre, une telle unique liaison sur le second bus avionique peut être réalisée entre n'importe laquelle des troisièmes interfaces avioniques desdites au moins deux voies secondaires et la quatrième interface avionique du calculateur secondaire.

Le nombre de trames secondaires de données de terrain nécessaires pour émettre les trames avioniques sur le second bus de terrain peut dépendre du type de bus de terrain utilisé.

De plus, le nombre de trames secondaires de données avioniques stockées dans chaque mémoire secondaire peut dépendre de l'implémentation et du bilan d'occupation du second bus avionique et du second bus de terrain.

Une seule voie secondaire parmi plusieurs peut transmettre les trames secondaires de données avionique au moyen de sa troisième interface avionique dès lors que des trames secondaires de données avioniques sont disponibles dans la file d'émission et tant que celle-ci n'est pas vide.

Selon un premier exemple d'architecture duplex, l'architecture peut comporter au moins un équipement, chaque équipement comportant chacune desdites au moins deux voies primaires et desdites au moins deux voies secondaires.

Selon une première alternative, un unique équipement peut comporter plusieurs interfaces de terrain reliées entre elles respectivement via le premier bus de terrain et via le second bus de terrain.

Cet unique équipement peut comporter également une seule première interface avionique reliée au premier bus avionique et une seule troisième interface avionique reliée au second bus avionique.

Le premier bus de terrain et le second bus de terrain peuvent dans ce cas faire partie de l'unique équipement de l'architecture.

Selon une seconde alternative, l'architecture peut comporter plusieurs équipements, chacun des équipements comporte alors plusieurs interfaces de terrain primaires reliées entre elles via le premier bus de terrain et plusieurs interfaces de terrain secondaires reliées entre elles via le second bus de terrain. Un des équipements peut comporter la première interface avionique compatible avec le premier bus avionique et un autre équipement peut comporter la troisième interface avionique compatible avec le second bus avionique.

Les premier et second bus de terrain peuvent dans ce cas faire partie des au moins deux équipements de l'architecture.

Selon un second exemple d'architecture duplex, l'architecture peut comporter au moins deux équipements, chaque équipement comportant une seule desdites au moins deux voies primaires et une seule desdites au moins deux voies secondaires.

Autrement dit, un premier équipement peut comporter des premières interface de terrain primaire et secondaire correspondant à chacune des premières voies primaire et secondaire. Le second équipement peut comporter des secondes interface de terrain primaire et secondaire correspondant à chacune des premières voies primaire et secondaire. Ces premières et secondes interfaces de terrain primaires et secondaires sont alors respectivement reliées entre elles via le premier bus de terrain et via le second bus de terrain.

Seul le premier équipement peut alors comporter la première interface avionique compatible avec le premier bus avionique. De même afin de fournir une architecture duplex minimale, seul le second équipement peut comporter la troisième interface avionique compatible avec le second bus avionique.

Les premier et second bus de terrain peuvent dans ce cas être externes aux équipements de l'architecture.

Avantageusement, ladite au moins une trame secondaire montante de données de terrain reçue via le second bus de terrain et/ou l'ensemble des trames secondaires montantes de données avioniques peut/peuvent être transmis au moyen de signaux électriques ou optiques.

Autrement dit, le second bus de terrain et/ou le second bus avionique peut/peuvent comporter au moins un élément conducteur de l'électricité, tel un fil de cuivre, ou au moins une fibre optique pour transmettre ladite au moins une trame secondaire montante de données de terrain et/ou l'ensemble des trames secondaires montantes de données avioniques.

En pratique, le second bus de terrain peut être distinct du premier bus de terrain et du premier bus avionique, le second bus de terrain étant choisi parmi le groupe comportant un bus CAN, un bus CAN-FD, un bus LIN, un bus selon la norme EIA-485, un bus selon la norme EIA-422, un bus FlexRay, un bus Ethernet, un bus EtherCAT, un bus DeviceNet, un bus CANOpen, un bus CANOpen FD, un bus MODBUS, un bus PROFIBUS, et un bus PROFINET.

Par ailleurs, ladite au moins une trame secondaire montante de données de terrain reçue via le second bus de terrain et/ou l'ensemble desdites trames secondaires de données avioniques reçu via le second bus avionique peut/peuvent être transmis au moyen des signaux électriques ou optiques.

Autrement dit, le second bus de terrain et/ou le second bus avionique peut/peuvent comporter au moins un élément conducteur de l'électricité, tel un fil de cuivre, ou au moins une fibre optique permettant la transmission de ladite au moins une trame secondaire montante de données de terrain et/ou l'ensemble des trames secondaires de données avioniques entre la troisième interface avionique et la quatrième interface avionique.

En outre, le second bus avionique peut être choisi parmi le groupe comportant un bus selon la norme STANAG 3910, un bus selon la norme ARINC 429, un bus selon la norme MIL-STD-1553B, un bus selon la norme ARINC 629, un bus selon la norme EIA-485, un bus selon la norme EIA-422, un bus Ethernet et un bus selon la norme ARINC-664.

L'invention concerne également une architecture de transmission de données au sein d'un système avionique équipant un véhicule, l'architecture comportant un premier bus de terrain et un premier bus avionique, le premier bus avionique étant distinct du premier bus de terrain.

Selon l'invention, une telle architecture est remarquable en ce qu'elle comporte :
- au moins deux voies primaires comportant chacune :
   ∘ une interface de terrain primaire, les interfaces de terrain étant interconnectées au premier bus de terrain ;
   ∘ une première interface avionique compatible avec le premier bus avionique ;
- au moins un calculateur primaire muni d'une deuxième interface avionique en communication via le premier bus avionique avec uniquement une première interface avionique parmi les premières interfaces avioniques desdites au moins deux voies primaires, les autres premières interfaces avioniques étant laissées libres et disjointes de tout bus avionique, ledit au moins un calculateur primaire émettant au moins une trame primaire descendante de données avioniques via ledit premier bus avionique ;
lesdites au moins deux voies primaires comportant chacune :
∘ une unité de traitement primaire utilisant ladite au moins une trame primaire descendante de données avioniques ;
∘ au moins une unité de conversion primaire convertissant ladite au moins une trame primaire descendante de données avioniques émise par ledit au moins un calculateur primaire en au moins une trame primaire descendante de données de terrain destinée à être transmise via le premier bus de terrain à chacune des autres voies primaires et, inversement, convertissant chaque trame primaire descendante de données de terrain reçue via le premier bus de terrain en une trame primaire descendante de données avioniques ; et
∘ une mémoire primaire stockant un ensemble des trames primaires descendantes de données avioniques.

Comme précédemment, une telle architecture peut être de différentes natures et notamment être mise en œuvre selon le premier mode de réalisation en étant de type simplex, ou selon le second mode de réalisation en étant de type duplex.

Par ailleurs, l'expression « trame primaire descendante de données avioniques » désigne une structure de base d'un ensemble de données échangées via le premier bus avionique depuis ledit au moins un calculateur primaire vers les au moins deux voies primaires.

De même, l'expression « trame primaire descendante de données de terrain » désigne une autre structure de base d'un ensemble de données échangées via le premier bus de terrain. Cette structure est dite « descendante » car elle se rapporte aux données émises par le calculateur avionique vers les au moins deux voies primaires.

En outre, et selon un premier mode de réalisation de l'invention, l'architecture peut être de type simplex et comporter uniquement des voies primaires. Dans ce cas, l'architecture comporte un unique bus de terrain formé par ledit premier bus de terrain et un unique bus avionique formé par ledit premier bus avionique.

Selon un second mode de réalisation de l'invention, l'architecture peut être de type duplex et peut comporter, en plus du premier bus de terrain, du premier bus avionique et des voies primaires :
- un second bus de terrain, le second bus de terrain étant distinct du premier bus de terrain et du premier bus avionique ;
- un second bus avionique, le second bus avionique étant distinct du premier bus de terrain, du premier bus avionique et du second bus de terrain ;
- au moins deux voies secondaires distinctes des au moins deux voies primaires, les au moins deux voies secondaires comportant chacune :
   ∘ une interface de terrain secondaire, les interfaces de terrain secondaires étant interconnectées au second bus de terrain ;
   ∘ une troisième interface avionique compatible avec le second bus avionique ;
- au moins un calculateur secondaire muni d'une quatrième interface avionique en communication via le second bus avionique avec uniquement une troisième interface avionique parmi les troisièmes interfaces avioniques des au moins deux voies secondaires, les autres troisièmes interfaces avioniques étant laissées libres et disjointes de tout bus avionique, ledit au moins un calculateur secondaire émettant **au moins** une trame secondaire descendante de données avioniques via le second bus avionique ;
lesdites au moins deux voies secondaires comportant chacune :
∘ une unité de traitement secondaire utilisant ladite au moins une trame secondaire descendante de données avioniques ;
∘ au moins une unité de conversion secondaire convertissant ladite au moins une trame secondaire descendante de données avioniques émise par ledit au moins un calculateur secondaire en au moins une trame secondaire descendante de données de terrain destinée à être transmise via le second bus de terrain à chacune des autres voies secondaires et, inversement, convertissant chaque trame secondaire descendante de données de terrain reçue via le second bus de terrain en une trame secondaire descendante de données avioniques ; et
∘ une mémoire secondaire stockant un ensemble des trames secondaires descendantes de données avioniques.

En outre, une telle architecture, quel que soit le mode de réalisation simplex ou duplex, peut comme précédemment comporter au moins un équipement, chaque équipement comportant chacune desdites au moins deux voies primaires, voire également desdites au moins deux voies secondaires.

Alternativement, l'architecture peut comporter au moins deux équipements, chaque équipement comportant une seule desdites au moins deux voies primaires, voire également une seule desdites au moins deux voies secondaires.

La présente invention a aussi pour objet un véhicule, tel un aéronef, comportant une architecture de transmission de données au sein d'un système avionique équipant le véhicule, l'architecture comportant un premier bus de terrain et un premier bus avionique.

Ce véhicule est remarquable en ce que l'architecture est telle que décrite précédemment. En outre, l'architecture peut être de différentes natures et notamment être mise en œuvre selon le premier mode de réalisation en étant de type simplex, ou selon le second mode de réalisation en étant de type duplex.

L'invention et ses avantages apparaîtront avec plus de détails dans le cadre de la description qui suit avec des exemples donnés à titre illustratif en référence aux figures annexées qui représentent :
la Figure 1, un schéma illustrant une architecture de transmission de données selon l'art antérieur ;
la Figure 2, un schéma représentatif d'une architecture de transmission de données conforme à l'invention ;
la Figure 3, un logigramme illustrant en détail une architecture de transmission de données conforme à l'invention ;
la Figure 4, un premier exemple d'une architecture selon un premier mode de réalisation d'une architecture de transmission de données conforme à l'invention ;
la Figure 5, un deuxième exemple d'une architecture selon un premier mode de réalisation d'une architecture de transmission de données conforme à l'invention ;
la Figure 6, un troisième exemple d'une architecture selon un premier mode de réalisation d'une architecture de transmission de données conforme à l'invention ;
la Figure 7, un premier exemple d'une architecture selon un second mode de réalisation d'une architecture de transmission de données conforme à l'invention ;
la Figure 8, un deuxième exemple d'une architecture selon un second mode de réalisation d'une architecture de transmission de données conforme à l'invention ;
la Figure 9, un troisième exemple d'une architecture selon un second mode de réalisation d'une architecture de transmission de données conforme à l'invention ;
la Figure 10, un autre logigramme illustrant en détail un premier mode de réalisation d'une autre architecture de transmission de données conforme à l'invention ;
la Figure 11, un autre logigramme illustrant en détail un second mode de réalisation d'une autre architecture de transmission de données conforme à l'invention ;
la Figure 12, un exemple d'architecture non couvert par l'invention ; et
la Figure 13, un autre exemple d'architecture non couvert par l'invention.

Les éléments présents dans plusieurs figures distinctes sont affectés d'une seule et même référence.

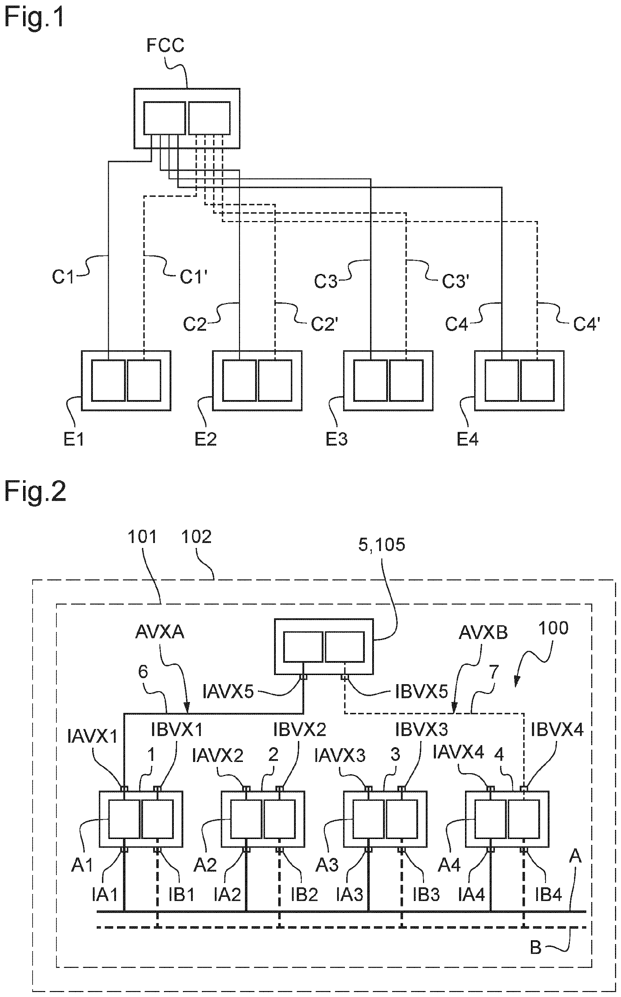

Classiquement et telle que représentée à la Figure 1, une architecture de transmission de données selon l'art antérieur peut comporter plusieurs équipements E1-E4 reliés à un calculateur, tel un calculateur de contrôle de vol FCC acronyme de l'expression en langue anglaise « Flight Control Computer ».

En outre, chaque équipement E1-E4 peut comporter deux voies. Le calculateur FCC est alors relié à chacun des équipements E1-E4 au moyen de bus avioniques complexes présentant une pluralité de connexions et d'interfaces dédiées à ces bus avioniques.

Tel que représenté, l'exemple d'architecture de la Figure 1 présente alors huit interfaces avioniques agencées sur les quatre équipements E1-E4 et huit interfaces avioniques sur le calculateur FCC.

Telle que représentée à la Figure 2, selon l'invention, une architecture de transmission de données partagée entre quatre équipements d'un système avionique et un calculateur peut être simplifiée. Ainsi, l'architecture 1 comporte un premier réseau comprenant un premier bus de terrain A et un premier bus avionique AVX A. En outre, l'architecture 1 peut également comporter également un second réseau comprenant un second bus de terrain B et un second bus avionique AVX B.

Cependant, contrairement à l'architecture de la Figure 1, le nombre de connexions entre les interfaces avioniques est minimal. Le nombre d'interfaces avioniques au niveau du calculateur est également réduit à une par réseau.

En effet, le premier bus avionique AVX A comporte une seule connexion 6 liant seulement l'équipement 1 avec un calculateur primaire 5 et le second bus avionique AVX B comporte une seule connexion 7 liant l'équipement 4 avec un calculateur secondaire 105 qui, tel que représenté à la Figure 2, peut être confondu avec le calculateur primaire 5.

Pour ce faire, l'architecture 1 comporte quatre voies primaires A1-A4 comportant chacune une interface de terrain primaire IA1-IA4 connectée au premier bus de terrain A.

De même, l'architecture 1 comporte quatre voies secondaires B1-B4 comportant chacune une interface de terrain secondaire IB1-IB4 connectée au second bus de terrain B.

Par suite, les équipements 1-4 peuvent communiquer entre eux via les bus de terrain A et B et seule une première interface avionique IAVX1 compatible avec le premier bus avionique AVX A de l'équipement 1 peut être reliée au calculateur 5 au moyen de la connexion 6. Les autres premières interfaces avioniques IAVX2-IAVX4 sont quant à elles laissées libres.

Pour ce faire, le calculateur primaire 5 est muni d'une deuxième interface avionique IAVX5 en communication avec la première interface avionique IAVX1 via le premier bus avionique AVX A.

De même, seule une troisième interface avionique IBVX4 compatible avec le second bus avionique AVX B de l'équipement 4 peut être reliée au calculateur secondaire 105 au moyen de la connexion 7. Les autres troisièmes interfaces avioniques IBVX1-IBVX3 sont quant à elles laissées libres.

Le calculateur secondaire 105 est muni quant à lui d'une quatrième interface avionique IBVX5 en communication avec la troisième interface avionique IBVX4 via le second bus avionique AVX B.

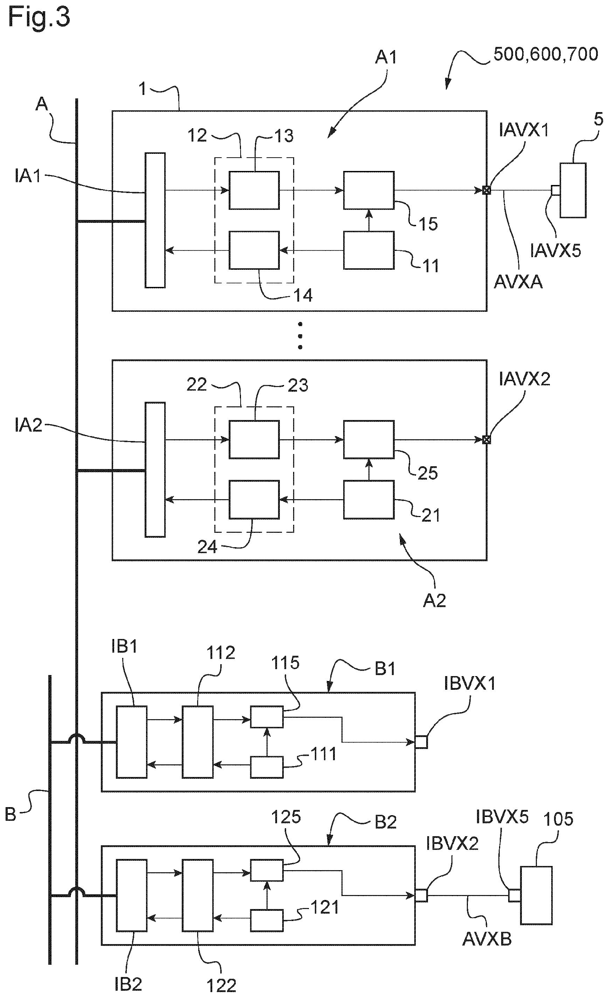

Par ailleurs, tel que représenté à la Figure 3, chaque voie primaire A1, A2 comporte une unité de traitement primaire 11, 21 générant des trames primaires montantes de données avioniques.

Chaque voie primaire A1, A2 comporte également au moins une unité de conversion primaire 12, 22 pouvant comporter un premier convertisseur 14, 24 permettant de convertir chaque trame primaire montante de données avioniques générée par l'unité de traitement primaire 11, 21 en au moins une trame primaire montante de données de terrain, destinée à être transmise, via le premier bus de terrain A, à toutes les autres voies primaire A1, A2 parmi lesdites au moins deux voies primaires A1, A2.

Chaque unité de conversion primaire 12, 22 peut également comporter un second convertisseur 13, 23 configuré pour convertir chaque trame primaire montante de données de terrain reçue via le premier bus de terrain A en une trame primaire montante de données avioniques.

Chaque voie primaire A1, A2 comporte aussi une mémoire primaire 15, 25 stockant un ensemble de trames primaires montantes de données avioniques comportant les trames primaires montantes de données avioniques générées d'une part par l'unité de traitement primaire 11, 21 de la voie primaire A1, A2 concernée et d'autre part par chacune des unités de traitement primaires 12, 22 desdites au moins deux voies primaires A1, A2.

L'ensemble de trames primaires montantes de données avioniques peut alors être inséré dans une file qui est alors transmise vers chaque première interface avionique IAVX1, IAVX2 compatible avec le premier bus avionique AVX A.

Le calculateur primaire 5 reçoit alors l'ensemble des trames primaires montantes de données avioniques via le premier bus avionique AVX A. Le calculateur primaire 5 peut alors, à partir d'au moins une desdites trames primaires montantes de données avioniques de cet ensemble de trames primaires montantes de données avioniques, exécuter au moins une fonction critique du système avionique.

Par ailleurs, chaque voie secondaire B1, B2 comporte une unité de traitement secondaire 111, 121 générant des trames secondaires montantes de données avioniques.

Chaque voie secondaire B1, B2 comporte également au moins une unité de conversion secondaire 112, 122 permettant de convertir chaque trame secondaire montante de données avioniques générée par l'unité de traitement secondaire 111, 121 en au moins une trame secondaire montante de données de terrain destinée à être transmise via le second bus de terrain B à toutes les autres voies secondaire B1, B2 parmi lesdites au moins deux voies secondaire B1, B2.

Chaque unité de conversion secondaire 112, 122 est configuré pour convertir chaque trame secondaire montante de données de terrain reçue via le second bus de terrain B en une trame secondaire montante de données avioniques.

Chaque voie secondaire B1, B2 comporte aussi une mémoire secondaire 115, 125 stockant un ensemble de trames secondaires montantes de données avioniques comportant les trames secondaires montantes de données avioniques générées d'une part par l'unité de traitement secondaire 111, 121 de la voie secondaire B1, B2 concernée et d'autre part par chacune des unités de traitement secondaires 112, 122 desdites au moins deux voies secondaires B1, B2.

L'ensemble de trames secondaires montantes de données avioniques peut alors être inséré dans une file qui est alors transmise vers chaque troisième interface avionique IBVX1, IBVX2 compatible avec le second bus avionique AVX B.

De même, lorsque celui-ci est présent, le calculateur secondaire 105, ici représenté à la Figure 3 comme étant disjoint du calculateur primaire 5, reçoit quant à lui l'ensemble des trames secondaires montantes de données avioniques via le second bus avionique AVX B et est configuré pour, à partir d'au moins une desdites trames secondaires montantes de données avioniques de l'ensemble desdites trames secondaires montantes de données avioniques, exécuter au moins une fonction critique du système avionique.

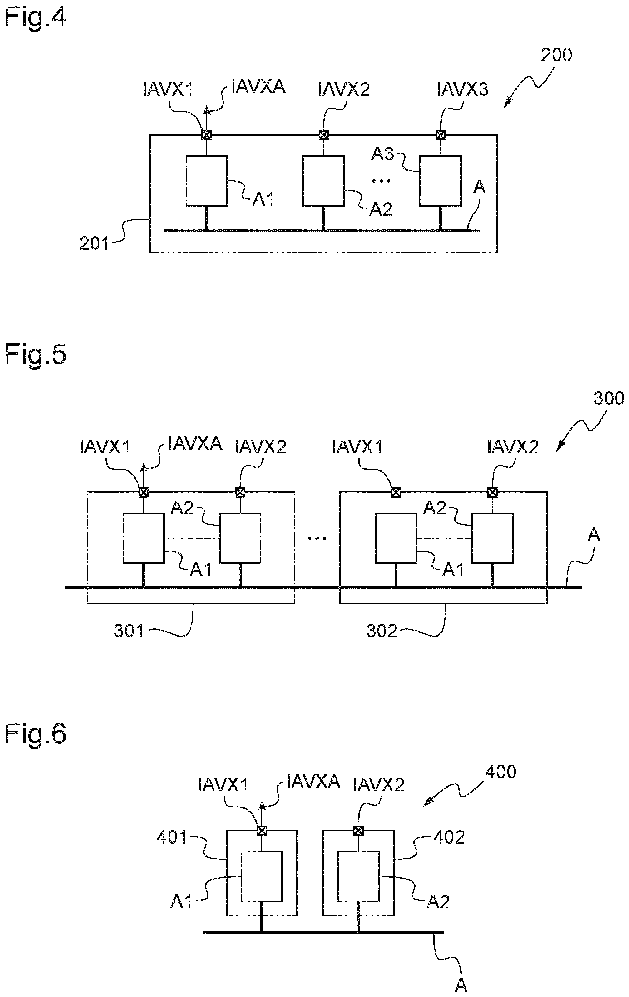

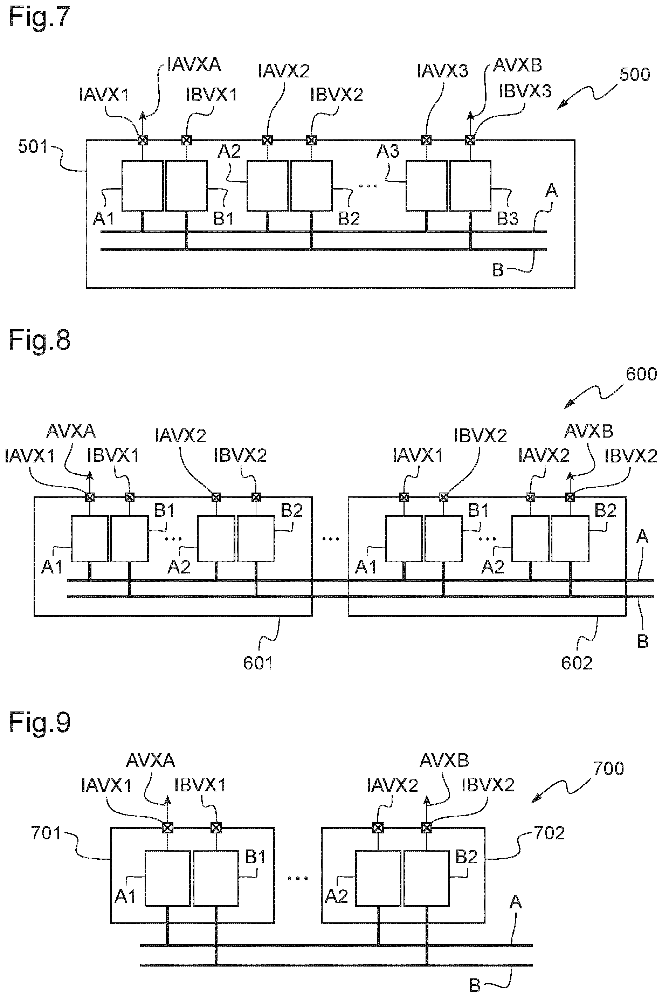

Telle que représentée aux Figures 4 à 6, selon un premier mode de réalisation de l'invention, une telle architecture peut être de type simplex. Alternativement, telle que représentée aux Figures7 à 9, selon un second mode de réalisation de l'invention, une telle architecture peut être de type duplex.

Ainsi selon un premier exemple du premier mode de réalisation représenté à la Figure 4, l'architecture 200 peut comporter un unique équipement 201 comportant lesdites au moins deux voies primaires A1, A2, A3.

L'architecture 200 comporte ainsi un seul premier bus avionique AVX A entre le calculateur primaire 5 non représenté et la première interface avionique IAVX1 de l'équipement 201 pour transmettre l'ensemble des trames primaires montantes de données avioniques issu des différentes voies primaires A1, A2, A3. Les autres premières interfaces avioniques IAVX2, IAVX3 de l'équipement 201 sont ainsi laissées libres.

Selon un deuxième exemple du premier mode de réalisation représenté à la Figure 5, l'architecture 300 peut comporter au moins deux équipements 301, 302, chaque équipement 301, 302 comportant respectivement les au moins deux voies primaires A1, A2.

Comme dans l'exemple précédemment, l'architecture 300 comporte un seul premier bus avionique AVX A entre le calculateur primaire 5 non représenté et la première interface avionique IAVX1 agencée sur un premier équipement 301 pour transmettre l'ensemble des trames primaires montantes de données avioniques issu des différentes voies primaires A1, A2. L'autre première interface avionique IAVX2 du premier équipement 301 est ainsi laissée libre. De même, les autres premières interfaces avioniques IAVX1, IAVX2 d'un second équipement 302 sont ainsi laissées libres.

Selon un troisième exemple du premier mode de réalisation représenté à la Figure 6, lesdites au moins deux voies primaires A1, A2 comportant une première voie primaire A1 et une seconde voie primaire A2, l'architecture 400 peut comporter un premier équipement 401 comportant exclusivement la première voie primaire A1 et un second équipement 402 comportant exclusivement la seconde voie primaire A2.

De même, l'architecture 400 comporte toujours un seul premier bus avionique AVX A entre le calculateur primaire 5 non représenté et la première interface avionique IAVX1 agencée sur un premier équipement 401 pour transmettre l'ensemble des trames primaires montantes de données avioniques issu des différentes voies primaires A1, A2. L'autre première interface avionique IAVX2 du second équipement 402 est quant à elle laissée libre.

Selon un premier exemple du second mode de réalisation représenté à la Figure 7, l'architecture 500 peut comporter un unique équipement 501 comportant au moins deux voies primaires A1, A2, A3 voire au moins deux voies secondaires B1, B2, B3.

Dans ce cas, l'architecture 500 comporte un seul second bus avionique AVX B entre le calculateur secondaire 105 non représenté et la troisième interface avionique IBVX3 de l'équipement 501 pour transmettre l'ensemble des trames secondaires montantes de données avioniques issu des différentes voies secondaires B1, B2, B3.

Les autres troisièmes interfaces avioniques IBVX1, IBVX2 de l'équipement 501 sont ainsi laissées libres.

Par ailleurs selon un deuxième exemple du second mode de réalisation représenté à la Figure 8, l'architecture 600 peut comporter au moins deux équipements 601, 602, chaque équipement 601, 602 comportant au moins deux voies primaires A1, A2 et au moins deux voies secondaires B1, B2.

Comme dans l'exemple précédemment, l'architecture 600 comporte toujours un seul second bus avionique AVX B entre le calculateur secondaire 105 non représenté et la troisième interface avionique IBVX2 agencée sur un second équipement 602 pour transmettre l'ensemble des trames secondaires montantes de données avioniques issu des différentes voies secondaires B1, B2. L'autre troisième interface avionique IBVX1 du second équipement 602 est ainsi laissée libre. De même, les autres troisièmes interfaces avioniques IBVX1, IBVX2 d'un premier équipement 601 sont ainsi laissées libres.

Enfin, selon un troisième exemple du second mode de réalisation représenté à la Figure 9, lesdites au moins deux voies primaires A1, A2 peuvent comporter une première voie primaire A1 et une seconde voie primaire A2. De même, lesdites au moins deux voies secondaires B1, B2 peuvent comporter une première voie secondaire B1 et une seconde voie secondaire B2. L'architecture 700 peut alors comporter un premier équipement 701 comportant les premières voies primaire A1 et secondaire B1 et un second équipement 702 comportant les secondes voies primaire A2 et secondaire B2.

Le second bus avionique AVX B comporte toujours une seule connexion entre le calculateur secondaire 105 et la troisième interface avionique IBVX2 agencée sur un second équipement 702 pour transmettre l'ensemble des trames secondaires montantes de données avioniques issu des différentes voies secondaires B1, B2. L'autre troisième interface avionique IBVX1 du premier équipement 701 est quant à elle laissée libre.

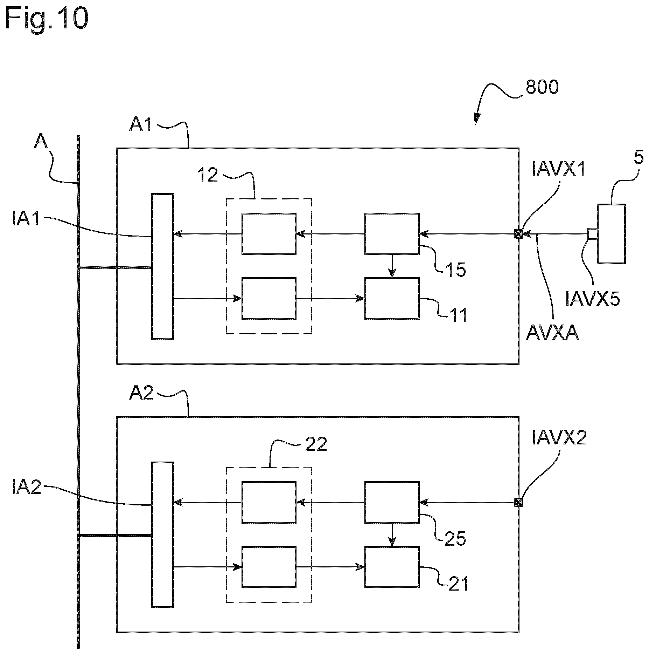

La Figure 10 illustre un premier mode de réalisation d'architecture 800 de type simplex permettant une transmission de données au sein d'un système avionique 101 équipant un véhicule 102. Une telle architecture 800 comporte comme précédemment un premier bus de terrain A et un premier bus avionique AVX A distinct l'un de l'autre.

Une telle architecture 800 comporte au moins deux voies primaires A1, A2 comportant chacune une interface de terrain primaire IA1, IA2, ces interfaces de terrain IA1, IA2 étant interconnectées au premier bus de terrain A.

Les au moins deux voies primaires A1, A2 comporte également chacune une première interface avionique IAVX1, IAVX2 compatible avec le premier bus avionique AVX A.

L'architecture 800 comporte également au moins un calculateur primaire 5 muni d'une deuxième interface avionique IAVX5 en communication via le premier bus avionique AVX A avec uniquement une première interface avionique IAVX1 parmi les premières interfaces avioniques IAVX1, IAVX2 desdites au moins deux voies primaires A1, A2, les autres premières interfaces avioniques IAVX2 étant laissées libres et disjointes de tout bus avionique, ledit au moins un calculateur primaire 5 émettant au moins une trame primaire descendante de données avioniques via le premier bus avionique AVX A.

Dès lors, les au moins deux voies primaires A1, A2 comportent également chacune une unité de traitement primaire 11, 21 utilisant ladite au moins une trame primaire descendante de données avioniques.

Les au moins deux voies primaires A1, A2 comportent également chacune au moins une unité de conversion primaire 12, 22 convertissant ladite au moins une trame primaire descendante de données avioniques émise par ledit au moins un calculateur primaire 5 en au moins une trame primaire descendante de données de terrain destinée à être transmise via le premier bus de terrain A à chacune des autres voies primaires A2 et, inversement, convertissant chaque trame primaire descendante de données de terrain reçue via le premier bus de terrain A en une trame primaire descendante de données avioniques.

Enfin, les au moins deux voies primaires A1, A2 comportent une mémoire primaire 15, 25 stockant un ensemble des trames primaires descendantes de données avioniques.

En outre, une telle architecture 800 peut, comme précédemment pour les architectures 200 et 300 représentées aux Figures 4 et 5, comporter au moins un équipement, chaque équipement comportant chacune desdites au moins deux voies primaires A1, A2.

Alternativement, l'architecture 800 peut, comme précédemment pour l'architecture 400 représentée à la Figure 6, comporter au moins deux équipements, chaque équipement comportant une seule desdites au moins deux voies primaires A1, A2.

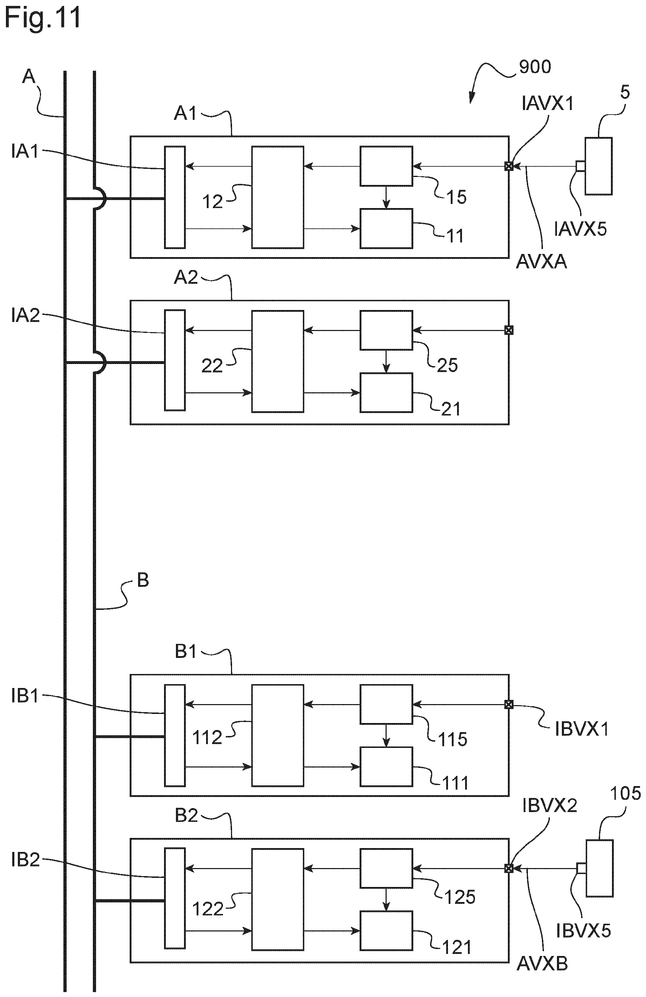

A l'instar des architectures 500, 600 et 700, et telle que représentée à la Figure 11 selon un second mode de réalisation de type duplex, l'architecture 900 peut comporter au moins deux voies secondaires B1, B2 en plus des au moins deux voies primaires A1, A2.

En plus du premier bus de terrain A, l'architecture 900 comporte un second bus de terrain B, le second bus de terrain B étant distinct du premier bus de terrain A et du premier bus avionique AVX A.

De même, chaque voie secondaire B1, B2 comporte une interface de terrain secondaire IB1, IB2, les interfaces de terrain secondaires IB1, IB2 étant interconnectées au second bus de terrain B.

De plus, chaque voie secondaire B1, B2 comporte une troisième interface avionique IBVX1, IBVX2 compatible avec le second bus avionique AVX B.

L'architecture 900 comporte aussi un calculateur secondaire 105, ici représenté comme étant disjoint du calculateur primaire 5, permettant d'émettre un ensemble des trames secondaires descendantes de données avioniques via le second bus avionique AVX B. Un tel calculateur secondaire 105 peut également être confondu avec le calculateur primaire 5.

Le calculateur secondaire 105 est ainsi muni d'une quatrième interface avionique IBVX5 en communication via le second bus avionique AVX B avec uniquement une troisième interface avionique IBVX2 parmi les troisièmes interfaces avioniques IBVX1, IBVX2 des au moins deux voies secondaires B1, B2.

Ainsi, l'autre troisième interface avionique IBVX1 est quant à elle laissée libre et disjointe de tout bus avionique.

En outre, chacune des voies secondaires B1, B2 comporte une unité de traitement secondaire 111, 121 utilisant au moins une trame secondaire descendante de données avioniques et une unité de conversion secondaire 112, 122 configurée pour convertir une trame secondaire descendante de données avioniques émise par le calculateur secondaire 105 en au moins une trame secondaire descendante de données de terrain destinée à être transmise via le second bus de terrain B à chacune des autres voies secondaires B1, B2 et, inversement, convertissant chaque trame secondaire descendante de données de terrain reçue via le second bus de terrain B en une trame secondaire descendante de données avioniques.

Par ailleurs, chacune des voies secondaires B1, B2 comporte une mémoire secondaire 115, 125 stockant un ensemble de plusieurs trames secondaires descendantes de données avioniques.

Par ailleurs, chaque voie secondaire B1, B2 comporte une unité de traitement secondaire 111, 121 générant des trames secondaires montantes de données avioniques.

En outre, une telle architecture 900 peut, comme précédemment pour les architectures 500 et 600 représentées aux

Figures 7 et 8, comporter au moins un équipement, chaque équipement comportant chacune desdites au moins deux voies primaires A1, A2 et desdites au moins deux voies secondaires B1, B2.

Alternativement, l'architecture 900 peut, comme précédemment pour l'architecture 700 représentée à la Figure 9, comporter au moins deux équipements, chaque équipement comportant une seule desdites au moins deux voies primaires A1, A2 et une seule desdites au moins deux voies secondaires B1, B2.

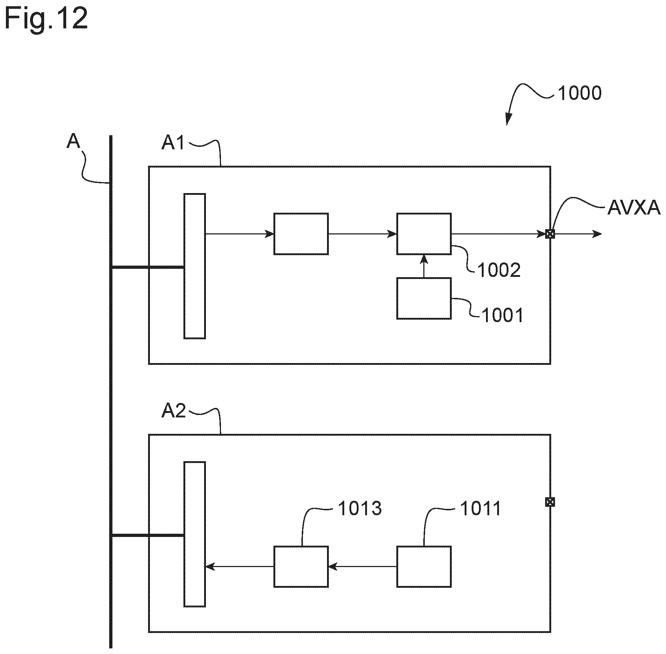

Selon l'exemple non revendiqué de la Figure 12, l'architecture 1000 peut comporter au moins deux voies primaires A1, A2.

Cependant, chaque voie primaire A2 qui n'est pas connectée sur le premier bus avionique AVX A peut comporter une unité de traitement primaire 1011 permettant de préparer des trames primaires montantes de données avioniques et une unité de conversion primaire 1013 convertissant ladite au moins une trame primaire montantes de données avioniques préparées par l'unité de traitement primaire 1011 puis émises sur le premier bus de terrain A.

Une des voies primaires A1 qui est connectée sur le premier bus avionique AVX A peut comporter une unité de traitement primaire 1001 permettant de préparer des trames primaires montantes de données avioniques puis de stocker dans une mémoire primaire 1002 les trames primaires montantes de données avioniques

La voie primaire A1 reçoit alors les trames primaires montantes de données avioniques des autres voies primaires A2 via le premier bus de terrain A et stocke également ces trames primaires montantes de données avioniques trames de données avioniques des autres voies primaires A2 dans la mémoire primaire 1002.

La voie primaire A1 comporte alors une première interface avionique IAVX1 permettant d'émettre les trames primaires montantes de données avionique contenues de la mémoire primaire 1002 sur le premier bus avionique AVX A.

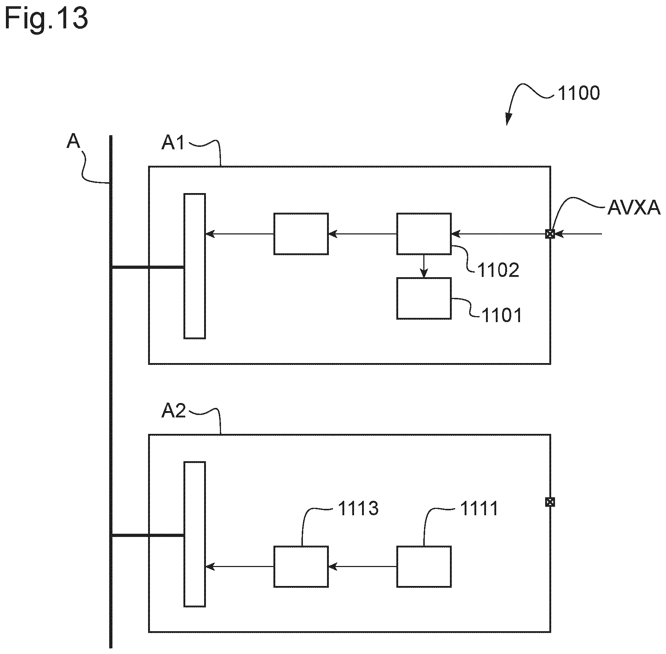

Selon l'exemple non revendiqué de la Figure 13, l'architecture 1100 peut comporter au moins deux voies primaires A1, A2.

Cependant, chaque voie primaire A2 qui n'est pas connectée sur le premier bus avionique AVX A peut comporter une unité de conversion primaire 1113 convertissant au moins une trame primaire descendante de données avioniques reçue via le premier bus de terrain A.

Chaque voie primaire A2 comporte également une unité de traitement primaire 1111 permettant d'utiliser au moins une trame primaire descendante de données avioniques récupérées via le bus de terrain A.

Une des voies primaires A1 qui est connectée sur le premier bus avionique AVX A peut comporter une interface avionique pour recevoir des trames de données avioniques et les stocke dans une mémoire primaire 1102.

La voie primaire A1 comporte également une unité de traitement primaire 1101 permettant d'utiliser les trames primaires descendantes de données avioniques qui lui sont destinées.

La voie primaire A1 comporte une unité de conversion primaire 1113 convertissant ladite au moins une trame primaire descendantes de données avioniques stockées dans la mémoire primaire 1102 puis les émets au moyen d'une interface de terrain sur le premier bus de terrain A si elles ne lui sont pas destinées.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Architecture (100, 200, 300, 400, 500, 600, 700) de transmission de données au sein d'un système avionique (101) équipant un véhicule (102), ladite architecture (100, 200, 300, 400, 500, 600, 700) comportant un premier bus de terrain (A) et un premier bus avionique (AVX A), ledit premier bus avionique (AVX A) étant distinct dudit premier bus de terrain (A),
**caractérisée en ce que** ladite architecture (100, 200, 300, 400, 500, 600, 700) comporte :
• au moins deux voies primaires (A1, A2, A3, A4) comportant chacune :
∘ une interface de terrain primaire (IA1, IA2, IA3, IA4), lesdites interfaces de terrain (IA1, IA2, IA3, IA4) étant interconnectées audit premier bus de terrain (A) ;
∘ une première interface avionique (IAVX1, IAVX2, IAVX3, IAVX4) compatible avec ledit premier bus avionique (AVX A) ;
∘ une unité de traitement primaire (11, 21) générant des trames primaires montantes de données avioniques ;
∘ au moins une unité de conversion primaire (12, 22) convertissant chaque trame primaire montante de données avioniques générée par ladite unité de traitement primaire (11, 21) en au moins une trame primaire montante de données de terrain destinée à être transmise via ledit premier bus de terrain (A) à chacune des autres voies primaires (A1, A2, A3, A4) et, inversement, convertissant chaque trame primaire montante de données de terrain reçue via ledit premier bus de terrain (A) en une trame primaire montante de données avioniques ; et
∘ une mémoire primaire (15, 25) stockant un ensemble desdites trames primaires montantes de données avioniques comportant lesdites trames primaires montantes de données avioniques générées par chacune des unités de traitement primaires (12, 22) desdites au moins deux voies primaires (A1, A2, A3, A4) ;
et, **en ce que** ladite architecture (100, 200, 300, 400, 500, 600, 700) comporte au moins un calculateur primaire (5) muni d'une deuxième interface avionique (IAVX5) en communication via ledit premier bus avionique (AVX A) avec uniquement une première interface avionique (IAVX1) parmi lesdites premières interfaces avioniques (IAVX1, IAVX2, IAVX3, IAVX4) desdites au moins deux voies primaires (A1, A2, A3, A4), les autres premières interfaces avioniques (IAVX1,IAVX2, IAVX3, IAVX4) étant laissées libres et disjointes de tout bus avionique, ledit au moins un calculateur primaire (5) recevant ledit ensemble desdites trames primaires montantes de données avioniques via ledit premier bus avionique (AVX A) et étant configuré pour, à partir d'au moins une desdites trames primaires montantes de données avioniques dudit ensemble desdites trames primaires montantes de données avioniques, exécuter au moins une fonction critique dudit système avionique (101).

2. Architecture selon la revendication 1,
**caractérisée en ce que** ladite architecture (200, 300) comporte au moins un équipement (201, 301, 302) comportant au moins deux voies primaires (A1, A2) parmi lesdites au moins deux voies primaires (A1, A2).

3. Architecture selon la revendication 1,
**caractérisée en ce que** ladite architecture (400) comporte au moins deux équipements (401, 402), chaque équipement (401, 402) comportant une seule desdites au moins deux voies primaires (A1, A2).

4. Architecture selon l'une quelconque des revendications 1 à 3,
**caractérisée en ce que** ledit premier bus de terrain (A) est choisi parmi le groupe comportant un bus CAN, un bus CAN-FD, un bus LIN, un bus selon la norme EIA-485, un bus selon la norme EIA-422, un bus FlexRay, un bus Ethernet, un bus EtherCAT, un bus DeviceNet, un bus CANOpen, un bus CANOpen FD, un bus MODBUS, un bus PROFIBUS et un bus PROFINET.

5. Architecture selon l'une quelconque des revendications 1 à 4,
**caractérisée en ce que** ledit premier bus avionique (AVX A) est choisi parmi le groupe comportant un bus selon la norme STANAG 3910, un bus selon la norme ARINC 429, un bus selon la norme MIL-STD-1553B, un bus selon la norme ARINC 629, un bus selon la norme EIA-485, un bus selon la norme EIA-422, un bus Ethernet et un bus selon la norme ARINC-664.

6. Architecture selon la revendication 1,
**caractérisée en ce que** ladite architecture (500, 600, 700) comporte :
• un second bus de terrain (B), ledit second bus de terrain (B) étant distinct dudit premier bus de terrain (A) et dudit premier bus avionique (AVX A) ;
• un second bus avionique (AVX B), ledit second bus avionique (AVX B) étant distinct dudit premier bus de terrain (A), dudit premier bus avionique (AVX A) et dudit second bus de terrain (B) ;
• au moins deux voies secondaires (B1, B2, B3, B4) distinctes desdites au moins deux voies primaires (A1, A2, A3, A4), lesdites au moins deux voies secondaires (B1, B2, B3, B4) comportant chacune :
∘ une interface de terrain secondaire (IB1, IB2, IB3, IB4), lesdites interfaces de terrain secondaires (IB1, IB2, IB3, IB4) étant interconnectées audit second bus de terrain (B) ;
∘ une troisième interface avionique (IBVX1, IBVX2, IBVX3, IBVX4) compatible avec ledit second bus avionique (AVX B) ;
∘ une unité de traitement secondaire (111, 121) générant des trames secondaires montantes de données avioniques ;
∘ au moins une unité de conversion secondaire (112, 122) convertissant chaque trame secondaire montante de données avioniques générée par ladite unité de traitement secondaire (111, 121) en au moins une trame secondaire montante de données de terrain destinée à être transmise via ledit second bus de terrain (B) à chacune des autres voies secondaires (B1, B2, B3, B4) et, inversement, convertissant chaque trame secondaire montante de données de terrain reçue via ledit second bus de terrain (B) en une trame secondaire montante de données avioniques ;
∘ une mémoire secondaire (115, 125) stockant un ensemble desdites trames secondaires montantes de données avioniques comportant lesdites trames secondaires montantes de données avioniques générées par chacune des unités de traitement secondaires (111, 121) desdites au moins deux voies secondaires (B1, B2, B3, B4) ;
et, **en ce que** ladite architecture (500, 600, 700) comporte au moins un calculateur secondaire (105) muni d'une quatrième interface avionique (IBVX5) en communication via ledit second bus avionique (AVX B) avec uniquement une troisième interface avionique (IBVX2, IBVX4) parmi lesdites troisièmes interfaces avioniques (IBVX1, IBVX2, IBVX3, IBVX4) desdites au moins deux voies secondaires (B1, B2, B3, B4), les autres troisièmes interfaces avioniques (IBVX1,IBVX2, IBVX3, IBVX4) étant laissées libres et disjointes de tout bus avionique, ledit au moins un calculateur secondaire (105) recevant ledit ensemble desdites trames secondaires montantes de données avioniques via ledit second bus avionique (AVX B) et étant configuré pour, à partir d'au moins une desdites trames secondaires de données avioniques dudit ensemble desdites trames secondaires montantes de données avioniques, exécuter au moins une fonction critique dudit système avionique (101).

7. Architecture selon la revendication 6,
**caractérisée en ce que** ladite architecture (500, 600) comporte au moins un équipement (501, 601, 602), chaque équipement (501, 601, 602) comportant chacune desdites au moins deux voies primaires (A1, A2) et desdites au moins deux voies secondaires (B1, B2).

8. Architecture selon la revendication 6,
**caractérisée en ce que** ladite architecture (700) comporte au moins deux équipements (701, 702), chaque équipement (701, 702) comportant une seule desdites au moins deux voies primaires (A1, A2) et une seule desdites au moins deux voies secondaires (B1, B2).

9. Architecture selon l'une quelconque des revendications 6 à 8,
**caractérisée en ce que** ledit second bus de terrain (B) est choisi parmi le groupe comportant un bus CAN, un bus CAN-FD, un bus LIN, un bus selon la norme EIA-485, un bus selon la norme EIA-422, un bus FlexRay, un bus Ethernet, un bus EtherCAT, le bus DeviceNet, le bus CANOpen, le bus CANOpen FD, un bus MODBUS, un bus PROFIBUS, et un bus PROFINET.

10. Architecture selon l'une quelconque des revendications 6 à 9,
**caractérisée en ce que** ledit second bus avionique (AVX B) est choisi parmi le groupe comportant un bus selon la norme ARINC 429, un bus selon la norme MIL-STD-1553B, un bus selon la norme ARINC 629, un bus selon la norme EIA-485, un bus selon la norme EIA-422, un bus Ethernet et un bus selon la norme ARINC-664.

11. Architecture (800, 900) de transmission de données au sein d'un système avionique (101) équipant un véhicule (102), ladite architecture (800, 900) comportant un premier bus de terrain (A) et un premier bus avionique (AVX A), ledit premier bus avionique (AVX A) étant distinct dudit premier bus de terrain (A),
**caractérisée en ce que** ladite architecture (800, 900) comporte :
• au moins deux voies primaires (A1, A2, A3, A4) comportant chacune :
∘ une interface de terrain primaire (IA1, IA2, IA3, IA4), lesdites interfaces de terrain (IA1, IA2, IA3, IA4) étant interconnectées audit premier bus de terrain (A) ;
∘ une première interface avionique (IAVX1, IAVX2, IAVX3, IAVX4) compatible avec ledit premier bus avionique (AVX A) ;
• au moins un calculateur primaire (5) muni d'une deuxième interface avionique (IAVX5) en communication via ledit premier bus avionique (AVX A) avec uniquement une première interface avionique (IAVX1) parmi lesdites premières interfaces avioniques (IAVX1, IAVX2, IAVX3, IAVX4) desdites au moins deux voies primaires (A1, A2, A3, A4), les autres premières interfaces avioniques (IAVX1,IAVX2, IAVX3, IAVX4) étant laissées libres et disjointes de tout bus avionique, ledit au moins un calculateur primaire (5) émettant au moins une trame primaire descendante de données avioniques via ledit premier bus avionique (AVX A) ;
lesdites au moins deux voies primaires (A1, A2, A3, A4) comportant chacune :
∘ une unité de traitement primaire (11, 21) utilisant ladite au moins une trame primaire descendante de données avioniques ;
∘ au moins une unité de conversion primaire (12, 22) convertissant ladite au moins une trame primaire descendante de données avioniques émise par ledit au moins un calculateur primaire (5) en au moins une trame primaire descendante de données de terrain destinée à être transmise via ledit premier bus de terrain (A) à chacune des autres voies primaires (A1, A2, A3, A4) et, inversement, convertissant chaque trame primaire descendante de données de terrain reçue via ledit premier bus de terrain (A) en une trame primaire descendante de données avioniques ; et
∘ une mémoire primaire (15, 25) stockant un ensemble desdites trames primaires descendantes de données avioniques.

12. Architecture selon la revendication 11,
**caractérisée en ce que** ladite architecture (900) comporte :
• un second bus de terrain (B), ledit second bus de terrain (B) étant distinct dudit premier bus de terrain (A) et dudit premier bus avionique (AVX A) ;
• un second bus avionique (AVX B), ledit second bus avionique (AVX B) étant distinct dudit premier bus de terrain (A), dudit premier bus avionique (AVX A) et dudit second bus de terrain (B) ;
• au moins deux voies secondaires (B1, B2, B3, B4) distinctes desdites au moins deux voies primaires (A1, A2, A3, A4), lesdites au moins deux voies secondaires (B1, B2, B3, B4) comportant chacune :
∘ une interface de terrain secondaire (IB1, IB2, IB3, IB4), lesdites interfaces de terrain secondaires (IB1, IB2, IB3, IB4) étant interconnectées audit second bus de terrain (B) ;
∘ une troisième interface avionique (IBVX1, IBVX2, IBVX3, IBVX4) compatible avec ledit second bus avionique (AVX B) ;
• au moins un calculateur secondaire (105) muni d'une quatrième interface avionique (IBVX5) en communication via ledit second bus avionique (AVX B) avec uniquement une troisième interface avionique (IBVX2) parmi lesdites troisièmes interfaces avioniques (IBVX1, IBVX2) desdites au moins deux voies secondaires (B1, B2), les autres troisièmes interfaces avioniques (IBVX1) étant laissées libres et disjointes de tout bus avionique, ledit au moins un calculateur secondaire (105) émettant au moins une trame secondaire descendante de données avioniques via ledit second bus avionique (AVX B) ;
lesdites au moins deux voies secondaires (B1, B2) comportant chacune :
∘ une unité de traitement secondaire (111, 121) utilisant ladite au moins une trame secondaire descendante de données avioniques ;
∘ au moins une unité de conversion secondaire (112, 122) convertissant ladite au moins une trame secondaire descendante de données avioniques émise par ledit au moins un calculateur secondaire (105) en au moins une trame secondaire descendante de données de terrain destinée à être transmise via ledit second bus de terrain (B) à chacune des autres voies secondaires (B1, B2) et, inversement, convertissant chaque trame secondaire descendante de données de terrain reçue via ledit second bus de terrain (B) en une trame secondaire descendante de données avioniques ; et
∘ une mémoire secondaire (115, 125) stockant un ensemble desdites trames secondaires descendantes de données avioniques.

13. Véhicule (102) comportant une architecture (100, 200, 300, 400, 500, 600, 700, 800, 900) de transmission de données au sein d'un système avionique (101) équipant ledit véhicule (102), ladite architecture (100, 200, 300, 400, 500, 600, 700, 800, 900) comportant un premier bus de terrain (A) et un premier bus avionique (AVX A),
**caractérisé en ce que** ladite architecture (100, 200, 300, 400, 500, 600, 700, 800, 900) est selon l'une quelconque des revendications 1 à 12.
